# EUROPEAN PATENT APPLICATION

(11) **EP 3 933 238 A1**
(43) Date of publication of application: **05.01.2022**
(21) Application number: 20763773.7
(22) Date of filing: 26.02.2020
(51) Int. Cl.: F16K 17/04

(54) **GAS RELIEF VALVE**

(30) Priority: 28.02.2019 JP 2019035943
(71) Applicant: Kawasaki Jukogyo Kabushiki Kaisha, Kobe-shi, Hyogo 650-8670 (JP)
(72) Inventor: NAKAMURA, Noritaka, Kobe-shi, Hyogo 650-8670 (JP); SUZUKI, Yutaka, Kobe-shi, Hyogo 650-8670 (JP); YOSHIDA, Katsu, Kobe-shi, Hyogo 650-8670 (JP); SHIRASAWA,Masataka, Kobe-shi, Hyogo 650-8670 (JP); SASAKI, Nobuyuki, Kobe-shi, Hyogo 650-8670 (JP)
(74) Representative: EIP
(86) International application number: PCT/JP2020/007740
(87) International publication number: WO 2020/175553

(57) **Abstract**

A relief valve for gas includes: a housing having a valve port connecting with an inflow passage and an outflow passage, and a valve seat with a tapered shape formed in the inflow passage to surround the valve port; a valve body having a valve head part with a tapered shape and movable between a closed position where the valve head part is seated such that the valve head part is fit in the valve seat to close the valve port, and a full stroke position farthest from the valve seat; and a biasing member that biases the valve body to locate the valve body in the closed position, and the valve body has a seal member that is provided to externally fit on a seal groove formed on an outer circumferential face of the valve head part over an entire circumferential periphery, and to be seated on the valve seat in the closed position to seal between the valve seat and the valve head part.

## Description

### Technical Field

The present invention relates to a relief valve for gas for keeping the pressure of the gas flowing in a flow channel at a predetermined pressure or less.

### Background Art

A flow channel is provided with a relief valve for gas so as to prevent the pressure of the gas flowing in the flow channel from exceeding a predetermined value, and one example of such a relief valve is disclosed, for example, in PTL 1. The relief valve of PTL 1 has a seating member in a tip end part, namely, in a valve head of the valve body, and by seating the seating member on the protruding valve seat in such a manner that the seating member is pushed against the valve seat, the valve port is closed.

### Citation List

### Patent Literature

PTL 1: Japanese Laid-Open Patent Application Publication No. 2014-135219

### Summary of Invention

### Technical Problem

In the relief valve of PTL 1, a sheet member made of synthetic rubber is vulcanization-bonded to the valve body made of metal. The shape of the valve seat is complicated to keep the valve opening pressure constant, so that the valve seat is difficult to process. Therefore, reduction in the manufacturing cost of relief valves is limited.

In light of the above, it is an object of the present invention to provide a relief valve for gas capable of reducing the manufacturing cost.

### Solution to Problem

A relief valve for gas of the present invention includes: a housing having a valve port connecting with an inflow passage and an outflow passage, and a valve seat with a tapered shape formed in the inflow passage to connect with the valve port; a valve body having a valve head part with a tapered shape and movable between a closed position where the valve head part is seated such that the valve head part is fit in the valve seat to close the valve port, and a full stroke position farthest from the valve seat; and a biasing member that biases the valve body to locate the valve body in the closed position, and the valve body has a seal groove provided on an outer circumferential face of the valve head part over an entire circumferential periphery, and a seal member provided to externally fit on the seal groove and to be seated on the valve seat in the closed position to seal between the valve seat and the valve head part.

According to the present invention, since the valve port is closed by seating the seal member on the tapered valve seat, the valve seat can be formed into a tapered shape. Accordingly, there is no need to make a complicated processing on the valve seat, and the manufacturing cost of relief valves for gas can be reduced. In addition, since the seal member is externally fit on the seal groove, the seal member is easy to attach. Accordingly, the manufacturing cost of relief valves for gas can be reduced.

In the above invention, the valve seat may have a tapered shape, and have a proximal part and a distal part having different taper angles, the distal part may be located farther from the valve port than the proximal part so as to seat the valve head part when the valve body is located in the closed position, and the proximal part may have a more obtuse taper angle than the distal part.

According to the above configuration, it is possible to further reduce the switchover lift amount. This makes it possible to reduce the time during which the seal member is exposed to large differential pressure at the time of opening the valve, and further prevent the seal member from deforming and being damaged, and coming off from the seal groove.

In the above invention, the taper angle of the proximal part may continuously change such that the taper angle increases toward the valve port.

According to the above configuration, it is possible to further reduce the switchover lift amount. This makes it possible to reduce the time during which the seal member is exposed to large differential pressure at the time of opening the valve, and further prevent the seal member from deforming and being damaged, and coming off from the seal groove.

In the above invention, the inflow passage may be provided with a restrictor. According to the above configuration, it is possible to reduce the pressure of the gas flowing downstream the restrictor directly after opening the valve. This makes it possible to reduce the differential pressure acting on the seal member directly after opening the valve, and prevent the seal member from deforming and being damaged, and coming off from the seal groove.

In the above invention, the seal member may be arranged to fit in the seal groove, and the seal groove may have a curved surface shape in which a section of a lateral face of a secondary side is concave.

According to the above configuration, since the seal member can be pushed into the part of the curved surface shape when the seal member is pushed toward the secondary side, it is possible to prevent the seal member from falling off. Also, by designing the seal groove to have such a shape, it is possible to reduce the variation in the pressure necessary for moving the valve body to open the valve port, namely, the valve opening pressure.

### Advantageous Effects of Invention

According to the present invention, it is possible to reduce the manufacturing cost.

The above objects, other objects, features, and merits of the present invention will be apparent from the following detailed description of preferred embodiments with reference to attached drawings.

### Brief Description of Drawings

Fig. 1 is a sectional view of a relief valve for gas according to Embodiment 1 of the present invention.
Fig. 2 is a sectional view showing the state after the relief valve for gas of Fig. 1 is open.
Fig. 3 is a sectional view showing a full stroke state of the relief valve for gas of Fig. 1.
Fig. 4 is an enlarged sectional view of region X1 shown in Fig. 1.
Fig. 5 is an enlarged sectional view of region X2 shown in Fig. 2.
Fig. 6 is an enlarged sectional view of region X3 shown in Fig. 3.
Figs. 7 are sectional views showing, in an enlarged scale, part of a relief valve for gas according to Embodiment 2, wherein Fig. 7(a) is an sectional view of the relief valve for gas in a valve closed state, and Fig. 7(b) is a sectional view of the relief valve for gas in a valve open state.
Figs. 8 are sectional views showing, in an enlarged scale, part of relief valves for gas according to Embodiment 3 and Embodiment 4, wherein Fig. 8(a) is a sectional view of the relief valve for gas according to Embodiment 3, and Fig. 8(b) is a sectional view of the relief valve for gas according to Embodiment 4.
Fig. 9 is a sectional view of a relief valve for gas according to Embodiment 5.

### Description of Embodiments

Hereinafter, relief valves for gas 1, 1A to 1D according to Embodiments 1 to 5 of the present invention are described by referring to drawings. The concept of direction used in the following description is merely used for convenience in description, and should not be understood to limit the orientation or the like of the configuration of the invention to the described direction. The relief valves for gas 1, 1A to 1D described below each are merely one embodiment of the present invention. Therefore, the present invention is not limited to the embodiments, and addition, deletion, and modification can be made without departing from the scope of the invention.

### Embodiment 1

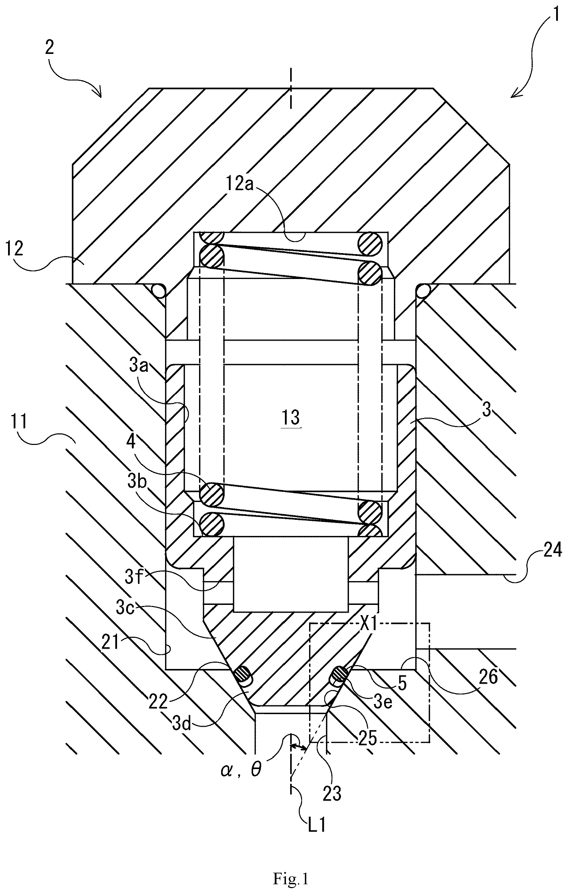

A high pressure gas tank stores high pressure gas, for instance, gas at 30 to 100 MPa, and is provided with valves having various functions so as to charge or discharge the high pressure gas to/from the high pressure gas tank. One example of such valves is a pressure reducing valve that reduces the pressure of the high pressure gas to be discharged from the tank to about 1 MPa, and as a safety device thereof, a relief valve for gas 1 shown in Fig. 1 is provided. The relief valve for gas 1 is provided, for example, in a valve block attached to the high pressure gas tank (not shown) or provided independently of the valve block, and when the pressure of the working gas flowing in the flow channel (not shown) exceeds a predetermined pressure, the relief valve is open to release the working gas outside. The relief valve for gas 1 having such function is configured as follows.

That is, the relief valve for gas 1 includes a housing 2, a valve body 3, and a coil spring 4, and the housing 2 principally has a housing body 11 and a lid body 12. The housing body 11 has a valve chamber 21 with a substantially bottomed cylindrical shape, and an opening part thereof is closed by the lid body 12 inserted therein. Further, the housing body 11 has an inflow passage 23 and an outflow passage 24. The inflow passage 23 extends along axial line L1 of the valve chamber 21, and connects at one end with the aforementioned flow channel, and opens at the other end to the valve chamber 21 via a valve port 22 on a bottom face 21a of the valve chamber 21. The outflow passage 24 opens at one end on the circumferential face of the valve chamber 21, and connects at the other end with the outside. The outflow passage 24 is not necessarily open on the circumferential face of the valve chamber 21, but may be formed in the lid body 12. In this manner, the two passages 23, 24 are connected with each other via the valve port 22, so that the working gas flowing in the flow channel can be discharged outside. On the other hand, the valve chamber 21 accommodates the valve body 3 and the coil spring 4 so as to stop discharge of the working gas by closing the valve port 22.

The valve body 3 is a substantially bottomed cylindrical member, and is accommodated in the valve chamber 21 movably along axial line L1 and apart from the lid body 12. More specifically, the valve body 3 has an inner hole 3a, and is accommodated in the valve chamber 21 in such a manner that the open end of the inner hole 3a is opposed to the lid body 12. The lid body 12 has a recess part 12a in a part opposed to the valve body 3. The inner hole 3a, together with the recess part 12a, forms a spring accommodation chamber 13, and the spring accommodation chamber 13 accommodates the coil spring 4.

The coil spring 4 which is one example of a biasing member is a so-called helical compression spring, and the coil spring 4 is received at one end by the lid body 12, and at the other end by a bottom face 3b of the valve body 3. Therefore, the valve body 3 is biased by the coil spring 4 to leave the lid body 12 in the direction toward the valve port 22, that is, toward the closed position as shown in Fig. 1. The coil spring 4 may be substituted by a flat spring, an elastic body, a magnetic spring, an air spring, a pushing mechanism by electrostatic force and the like. The valve body 3 biased by the coil spring 4 in this manner has a valve head part 3c on the side opposite to the open end, namely, in a tip end side part. The valve head part 3c has a tapered shape, more specifically a substantially truncated conical shape, and is formed such that the outer diameter of the tip end is smaller than the aperture of the valve port 22, and the outer diameter of the base end side is larger than the aperture of the valve port 22. Therefore, the valve head part 3c can be inserted into the inflow passage 23 via the valve port 22 over the range from the tip end to a middle part of the valve head part 3c. Also, a valve seat 25 is formed in the inflow passage 23 so as to seat a seat part 3d which is an insertable part of the valve head part 3c.

The valve seat 25 is formed in a part near the valve port 22 of the inflow passage 23 in the housing body 11, namely, in a part connecting with the valve port 22 of the inflow passage 23 in the present embodiment. Still more specifically, the valve seat 25 is formed in the inflow passage 23 to surround the valve port 22, and has substantially the same shape as the seat part 3d. In other words, the valve seat 25 forms a tapered shape, and a taper angle θ of the valve seat 25 is substantially the same as a half vertical angle α (=θ) of the valve head part 3c. Therefore, the seat part 3d can be seated on the valve seat 25 such that the seat part 3d is fit in the valve seat 25 to close the valve port 22. The half vertical angle α of the valve head part 3c satisfies, for example, 10° ≤ α ≤ 45°, and in the present embodiment, the half vertical angle α is 30°. On the outer circumferential face of the seat part 3d, a seal groove 3e is formed. The seal groove 3e is formed at distance s from the tip end of the valve head part 3c, and is formed on the outer circumferential face of the seat part 3d over the entire periphery. The section of the seal groove 3e has a substantially flat oval shape, and to the seal groove 3e a seal member 5 is attached so as to seal between the valve seat 25 and the seat part 3d in a seated position.

The seal member 5 is a synthetic rubber member having a substantially annular shape, and is, for example, an O ring in the present embodiment. The seal member 5 may be any annular seal without limited to an O ring. The section of the seal member 5 may be, for example, a trapezoidal section and a D-shaped section other than a circular section, and the section shape does not matter. The seal member 5 is attached to the outer circumferential face of the seat part 3d, namely, the outer circumferential face of the valve head part 3c such that the seal member is fit in the seal groove 3e. The section (more specifically, the section perpendicular to the circumferential direction) of the seal groove 3e has a substantially flat oval shape as described above, and lateral faces (that is, lateral faces on both sides in the longitudinal direction of the seal groove 3e) of a primary side (that is, the upstream side, and the tip end side of the valve head part 3c) and a secondary side (that is, the downstream side, and the base end side of the valve head part 3c) have substantially semicircular shapes. That is, the seal groove 3e has such a curved surface shape that the section of the lateral face of the primary side is concave, and the section of the lateral face of the secondary side is concave. The seal groove 3e having such a shape has a return in the downstream side part, and achieves the following effects. That is, when the seal member 5 is pushed by the gas at the time of opening the valve, the seal member 5 can be pushed into the downstream side part, so that the seal member 5 is hard to fall off. In addition, by employing such a shape, it is possible to reduce the variation in the pressure necessary for moving the valve body 3 to open the valve port 22, namely, the variation in the valve opening pressure. While only the seal member 5 is disposed in the seal groove 3e in the present embodiment, a backup ring in addition to the seal member 5 may be fit in to prevent the seal member 5 from falling out of the seal groove 3e.

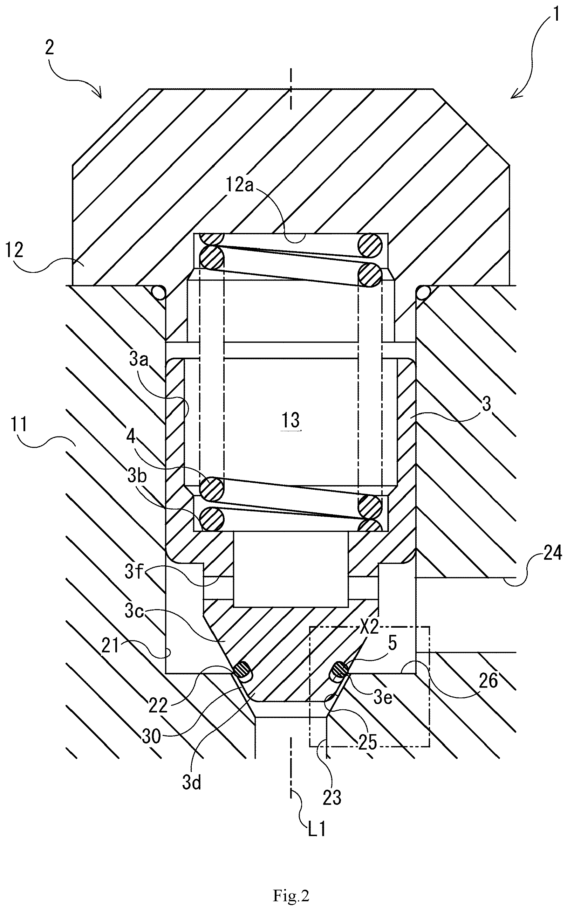

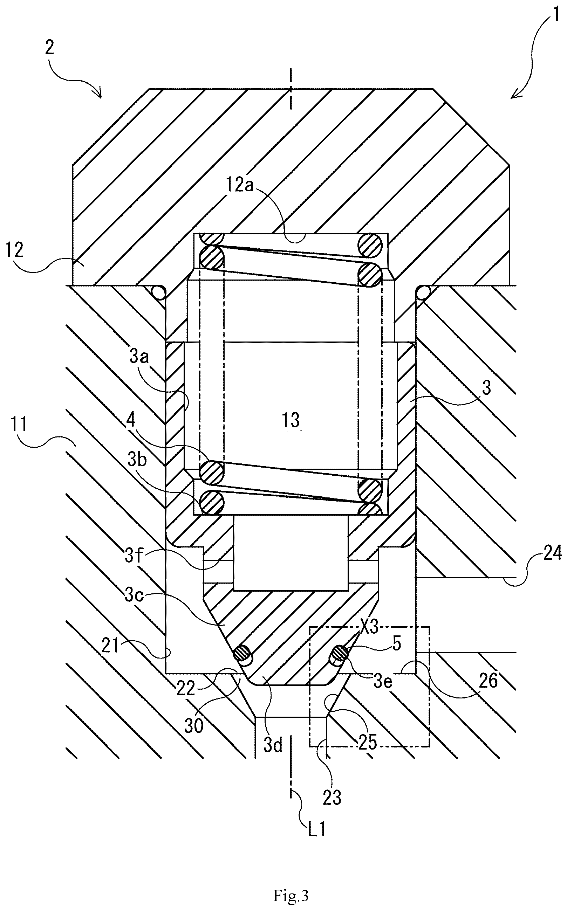

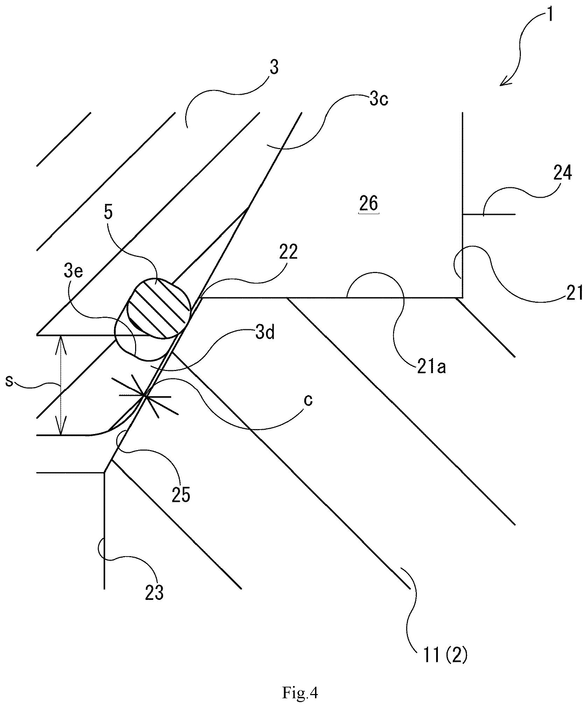

Inside diameter D2 of the seal member 5 arranged in this manner satisfies the relation of D2 ≥ D1 × 1.14 with pore diameter D1 of the inflow passage 23, and also the seal groove 3e is formed to allow the seal member 5 to fit therein. Further, wire diameter w of the seal member 5 is larger than depth d of the seal groove 3e, and the seal member 5 is so designed that part of the seal member 5 protrudes from the seal groove 3e in the attached state (see, for example, Fig. 2 and Fig. 3). Therefore, the seal member 5 can come into close contact with the valve seat 25 over an entire circumferential periphery when seated, and closely seal between the seat part 3d and the valve seat 25 (see Fig. 1 and Fig. 4). The valve body 3 configured as described above is further configured as follows.

That is, the valve body 3 has a base end side part having substantially the same diameter as the circumferential face of the valve chamber 21, and is guided by the circumferential face of the valve chamber 21 in a sliding manner. On the other hand, the remaining part including the valve head part 3c has a smaller diameter than the circumferential face of the valve chamber 21, and is surrounded by a valve passage 26 having a substantially annular shape. The valve passage 26 always connects with the outflow passage 24, and comes into connection with the inflow passage 23 when the valve port 22 is open. That is, when the valve body 3 leaves the valve seat 25 to open the valve port 22, the two passages 23, 24 connect with each other via the valve passage 26, and the working gas in the flow channel is released outside. Specifically, the valve body 3 has a communicating path 3f for allowing expansion and contraction of the spring accommodation chamber 13.

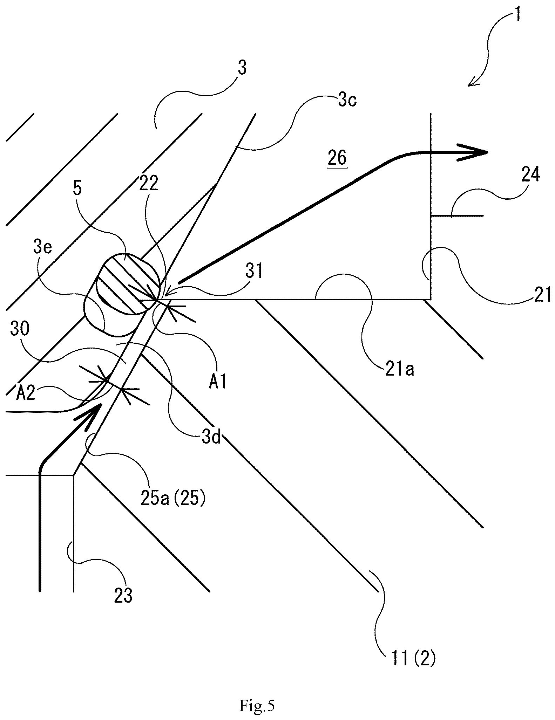

The relief valve for gas 1 configured as described above operates as follows. In the relief valve for gas 1, the working gas flowing in an unillustrated flow channel is guided to the inflow passage 23, and the pressure of the guided working gas acts on the tip end of the valve body 3, namely, the tip end of the valve head part 3c. Then, as the pressure of the unillustrated flow channel increases to reach a predetermined set pressure, the valve body 3 is lifted against the biasing force of the coil spring 4 (see Fig. 2). As a result, the valve body 3 leaves the valve seat 25 (more specifically, the seal member 5 leaves the valve seat 25) to form an annular passage 30 between the valve body 3 and the valve seat 25, and the valve port 22 is opened (see Fig. 5). The working gas enters the valve passage 26 through the annular passage 30, and is released outside through the outflow passage 24 (see the arrow in Fig. 5). By releasing part of the working gas flowing in the flow channel outside in this manner, the pressure of the working gas flowing in the flow channel is prevented from increasing to a predetermined set pressure or more.

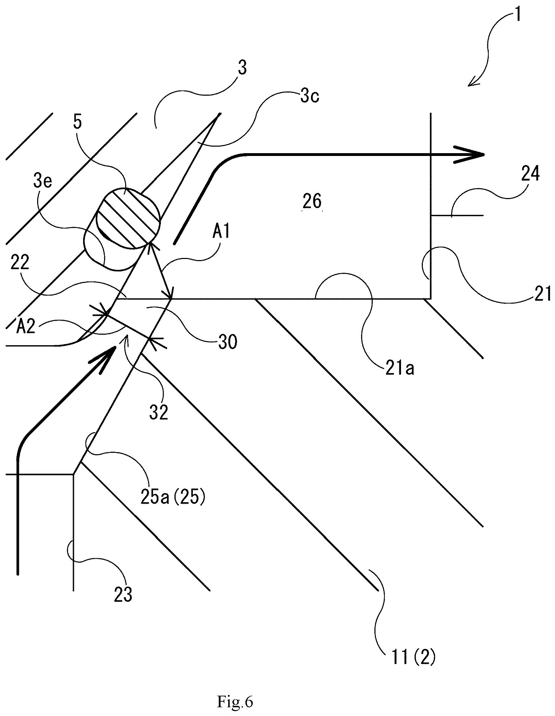

Even after leaving the valve seat 25, the valve body 3 is kept lifted to further extend the annular passage 30 to release the working gas outside at a larger flow rate. The valve body 3 is further lifted and when the lift amount from the closed position reaches full lift amount LF, the valve body 3 comes into abutment with the lid body 12 as shown in Fig. 3, and the valve body 3 stops at that position, namely, a full stroke position (see Fig. 3 and Fig. 6). In this manner, the valve body 3 can stroke from the closed position shown in Fig. 1 to the full stroke position shown in Fig. 3. On the other hand, in the relief valve for gas 1, when the working gas is released outside and the pressure of the working gas in the inflow passage 23 decreases, the valve body 3 is moved toward the closed position to reduce the releasing flow rate. Then, when the pressure of the working gas decreases to less than a predetermined set pressure, the valve body 3 is seated on the valve seat 25 to close the valve port 22.

In the relief valve for gas 1 having such a function, the seal member 5 seals between the valve head part 3c and the valve seat 25 (see Fig. 4), and in order to achieve this, the seal member 5 protrudes from the valve head part 3c as described above (see Fig. 5 and Fig. 6). Since the protruding seal member 5 is brought into abutment with the valve seat 25 to achieve the sealing, slight gap c is generated between the valve head part 3c and the valve seat 25 even when the valve is closed (see Fig. 4). Therefore, directly after opening the valve (that is, directly after the valve body 3 leaves the valve seat 25), the seal member 5 forms a throat 31 with the valve seat 25, and large differential pressure is generated at the upstream side and the downstream side of the seal member 5 by the throat 31. It is assumed that the differential pressure continuously acts on the seal member 5 to deform the seal member 5, and the seal member 5 comes off from the seal groove 3e. To prevent occurrence of such a situation, the relief valve for gas 1 is configured as follows.

That is, in the relief valve for gas 1, the annular passage 30 gradually extends as the valve body 3 lifts (that is, strokes toward one end of the axial direction). Since the valve body 3 and the valve seat 25 have tapered shapes, the rate of change in flow channel area of the annular passage 30 at the time of lifting differs depending on the position. More specifically, the rate of change in flow channel area in relation to the lift amount is larger on the base end side compared with the tip end side of the valve head part 3c. The flow channel area between the seal member 5 and the valve seat 25 (hereinafter, the flow channel area refers to an area of the section cut in the plane perpendicular to a seat face 25a of the valve seat 25) shows a larger rate of change compared with the flow channel area between the tip end of the valve body 3 and the valve seat 25 because the sealing member 5 is disposed far from the tip end. Therefore, as the valve body 3 strokes in the opening direction from the closed position, the two flow channel areas reverse at predetermined switchover lift amount LS in course of time. In other words, as the valve body 3 strokes by switchover lift amount LS to reach a switchover position, the position where a throat is formed in the annular passage 30, namely, a formation position is switched to a throat 32 from the throat 31.

The relief valve for gas 1 configured as described above exerts the following operation and effect. That is, in the relief valve for gas 1, the seal member 5 can come off from the valve port 22 while the valve body 3 strokes from the closed position to the full stroke position. It is assumed that the pressure of the working gas discharged from the annular passage 30 is not sufficiently reduced, and high in the vicinity of the valve port 22. The seal member 5 comes off from the valve port 22 and leaves there, and thus the seal member 5 can be prevented from being exposed to the high pressure working gas. This makes it possible to prevent the seal member 5 from deforming and being damaged, and coming off from the seal groove 3e. On the other hand, since distance s between the tip end of the valve head part 3c and the seal groove 3e, namely, distance s between the tip end of the valve head part 3c and the seal member 5 is set to be smaller than full lift amount LF, it is possible to guide the working gas to the valve chamber 21 while reducing the pressure of the working gas in the annular passage 30. Therefore, it is possible to prevent the seal member 5 from being exposed to high pressure.

Furthermore, in the relief valve for gas 1, since the seal member 5 is provided to externally fit on the seal groove 3e, the seal member 5 is easy to attach to the valve body 3. Therefore, the manufacturing cost of the relief valve for gas 1 can be reduced. Particularly in the relief valve for gas 1, by externally fitting the seal member 5 on the seal groove 3e, it is possible to eliminate the need of vulcanization bonding as in conventional arts, and it is possible to further reduce the manufacturing cost of the relief valve for gas 1.

Also, in the relief valve for gas 1, since the seal member 5 is seated on the valve seat 25 with a tapered shape to close the valve port 22, the valve seat 25 can be formed into a tapered shape. Accordingly, there is no need to make a complicated processing on the valve seat 25, and the manufacturing cost of the relief valve for gas 1 can be reduced.

Also, in the relief valve for gas 1, inside diameter D2 of the seal member 5 and pore diameter D1 of the inflow passage 23 satisfy the relation of D2 ≥ D1 × 1.14. Therefore, the seal member 5 can be disposed apart from the distal end of the valve seat 25 (namely, the open end of the inflow passage 23), so that the formation position of the throat can be switched earlier from the seal member 5 to other position. Also, by disposing the seal member 5 apart from the distal end of the valve seat 25, the seal member 5 can be disposed apart from the tip end of the valve body 3, so that it is possible to secure the space for forming the seal groove 3e. Accordingly, it is possible to form the seal groove 3e in an appropriate form, or in other words, it is possible to form the section of the seal groove 3e into a substantially flat oval shape as described above. This makes it possible to fit the seal member 5 in the seal groove 3e without damaging the seal member 5, and improve the assemblability of the seal member 5.

### Embodiment 2

The relief valve for gas 1A of Embodiment 2 resembles the relief valve for gas 1 of Embodiment 1 in configuration. Therefore, the configuration of the relief valve for gas 1A of the second embodiment is mainly described about the point different from that of the relief valve for gas 1 of the first embodiment, and the same configuration is denoted by the same reference numeral, and the description thereof is omitted. The same applies also to later-described relief valves for gas 1B to 1D of Embodiments 3 to 5.

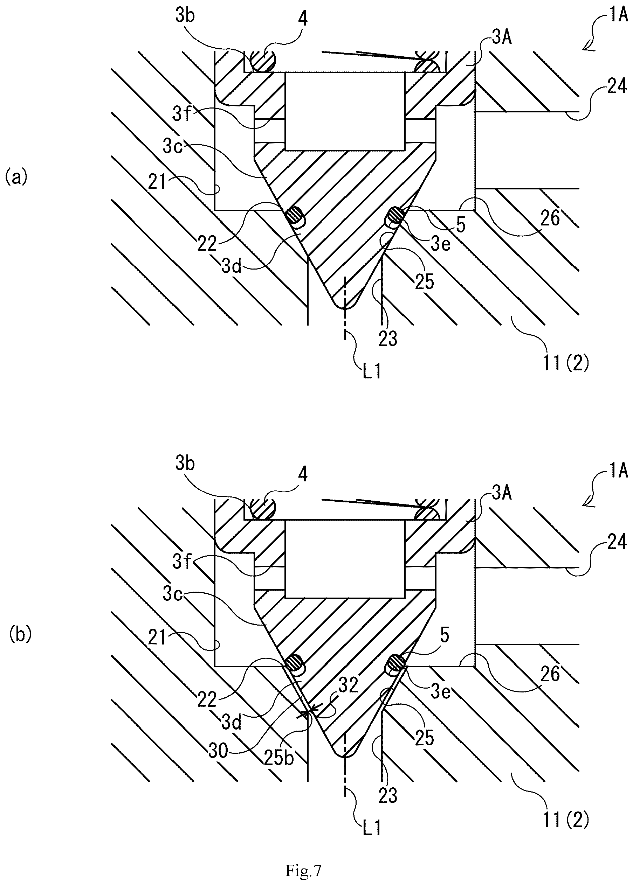

The relief valve for gas 1A of Embodiment 2 includes the housing 2, a valve body 3A, and the coil spring 4 as shown in Fig. 7(a), and the valve body 3A is configured as follows. That is, the valve head part 3c of the valve body 3A has a substantially conical shape, and has a tip end part extending beyond the valve seat 25. Therefore, in the relief valve for gas 1A, the position where the flow channel area minimizes at each position of the annular passage 30 other than positions between the seal member 5 and the valve seat 25 is as follows. That is, the flow channel area of the annular passage 30 minimizes between the distal end (namely, the open end on the side far from the valve port 22 in the valve seat 25) 25b of the valve seat 25 and the valve head part 3c (see Fig. 7(b)). The change in flow channel area between the distal end 25b and the valve head part 3c is gentler than the change in flow channel area between the tip end of the valve body 3 and the valve seat 25 in Embodiment 1. Therefore, in the relief valve for gas 1A, switchover lift amount LS2 thereof can be made smaller than switchover lift amount LS in Embodiment 1. This makes it possible to reduce the time during which the seal member 5 is exposed to large differential pressure at the time of opening the valve, and to further prevent the seal member 5 from deforming and being damaged, and coming off from the seal groove 3e.

Besides the above, the relief valve for gas 1A of Embodiment 2 exerts the same operation and effect as the relief valve for gas 1 of Embodiment 1.

The valve head part 3c of the valve body 3A does not necessarily have a substantially conical shape, but may have a substantially truncated conical shape likewise the valve head part 3c of Embodiment 1 as long as the valve head part 3c extends beyond the valve seat 25, and the tip end of the valve head part 3c is located on the distal end side than the valve seat 25 in the inflow passage 23.

### Embodiment 3

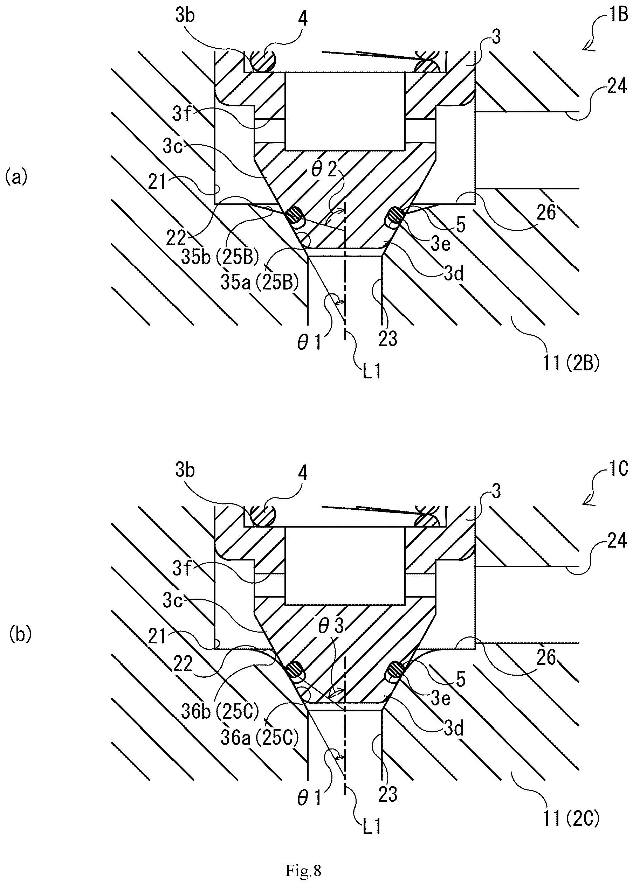

The relief valve for gas 1B of Embodiment 3 includes a housing 2B, the valve body 3, and the coil spring 4 as shown in Fig. 8(a), and a valve seat 25B of the housing 2B is configured as follows. That is, the valve seat 25B has a distal part 35a located far from the valve port 22, and a proximal part 35b located near the valve port 22. Both the distal part 35a and the proximal part 35b are tapered, and respectively have taper angles θ1, θ2 that are different from each other. Specifically, the taper angle θ2 of the proximal part 35b is more obtuse than the taper angle θ1 of the distal part 35a. Accordingly, the valve seat 25 extends outward in the radial direction toward the valve port 22. The seal member 5 is arranged to be seated on the distal part 35a.

In the relief valve for gas 1B configured as described above, by designing the taper angle θ2 of the proximal part 35b of the valve seat 25 to be larger than the taper angle θ1 of the distal part 35a, it is possible to switch the formation position with a smaller lift amount compared with the relief valve for gas 1 of Embodiment 1. This makes it possible to further prevent the seal member 5 from deforming and being damaged, and coming off from the seal groove 3e.

Besides the above, the relief valve for gas 1B of Embodiment 3 exerts the same operation and effect as the relief valve for gas 1 of Embodiment 1.

### Embodiment 4

The relief valve for gas 1C of Embodiment 4 includes a housing 2C, the valve body 3, and the coil spring 4 as shown in Fig. 8(b), and a valve seat 25C of the housing 2C is configured as follows. That is, the valve seat 25C has a distal part 36a located far from the valve port 22, and a proximal part 36b located near the valve port 22. Both the distal part 36a and the proximal part 36b are tapered, and respectively have taper angles θ1, θ3 that are different from each other. Specifically, the taper angle θ3 of the proximal part 36b is larger than the taper angle θ1 of the distal part 36a. The taper angle θ3 of the proximal part 36b continuously changes, and increases toward one end of the axial direction, namely, the valve port 22. The proximal part 36b having such a shape has a rounded shape in the present embodiment.

The relief valve for gas 1C of Embodiment 4 configured as described above exerts the same operation and effect as the relief valve for gas 1B of Embodiment 3.

### Embodiment 5

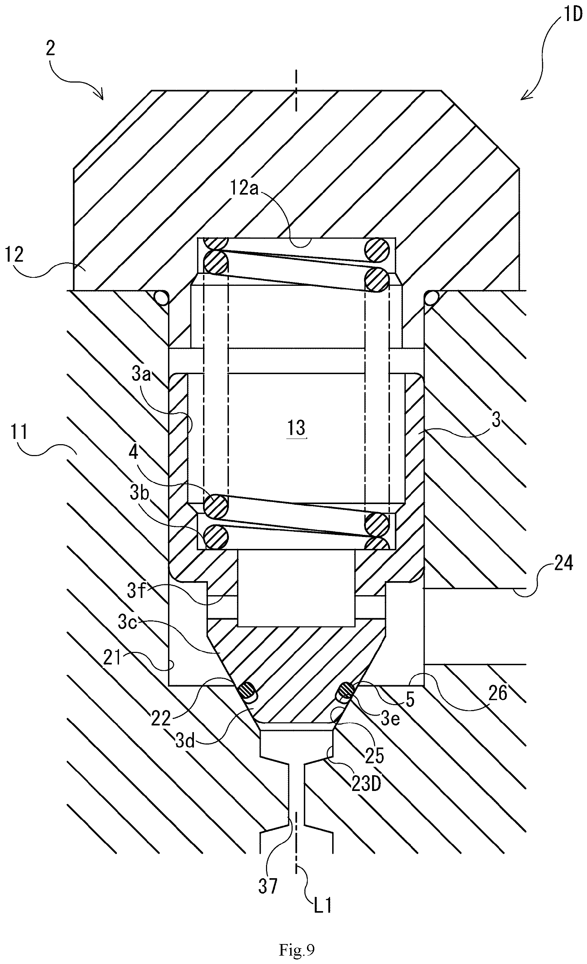

In the relief valve for gas 1D of Embodiment 5, an inflow passage 23D has a restrictor 37 as shown in Fig. 9. The restrictor 37 is capable of reducing the pressure of the gas on the side downstream the restrictor 37 at the time of opening the valve. That is, the pressure of the annular passage 30 can be controlled. This makes it possible to reduce the differential pressure acting on the seal member 5 directly after opening the valve, and prevent the seal member 5 from deforming and being damaged, and coming off from the seal groove 3e.

The relief valve for gas 1D of Embodiment 5 configured as described above exerts the same operation and effect as the relief valve for gas 1 of Embodiment 1.

### Other Embodiments

While the relief valves for gas 1, 1A to 1D of Embodiments 1 to 5 are provided in the flow channel that discharges the working gas from the high pressure gas tank, they are not necessarily provided in such a flow channel. In other words, the relief valves for gas 1, 1A to 1D of Embodiments 1 to 5 may be provided in a flow channel in which low pressure gas flows, and the application thereof does not matter.

Various modifications and other embodiments of the present invention will be apparent to those skilled in the art from the above description. Therefore, the above description should be interpreted merely as illustration, and is provided for the purpose of indicating the best mode for carrying out the present invention to those skilled in the art. The details of the structure and/or the function can be substantially changed without departing from the spirit of the present invention.

### Reference Signs List

- 1, 1A to 1C: relief valve for gas
- 2, 2B, 2C: housing
- 3, 3A: valve body
- 4: coil spring
- 5: seal member
- 21: valve chamber
- 21a: bottom face
- 22: valve port
- 23: inflow passage
- 24: outflow passage
- 25, 25B, 25C: valve seat
- 31: throat
- 32: throat
- 33: valve head part
- 33b: tip end part
- 34: annular narrow path (throat)
- 35: valve seat
- 35a, 36a: distal part
- 35b, 36b: proximal part

## Claims

1. A relief valve for gas comprising:
a housing having a valve port connecting with an inflow passage and an outflow passage, and a valve seat with a tapered shape formed in the inflow passage to connect with the valve port;
a valve body having a valve head part with a tapered shape, the valve body being movable between a closed position where the valve head part is seated such that the valve head part is fit in the valve seat to close the valve port, and a full stroke position farthest from the valve seat; and
a biasing member that biases the valve body to locate the valve body in the closed position,
the valve body having a seal groove provided on an outer circumferential face of the valve head part over an entire circumferential periphery, and a seal member provided to externally fit on the seal groove and to be seated on the valve seat in the closed position to seal between the valve seat and the valve head part.

2. The relief valve for gas according to claim 1, wherein
the valve seat has a tapered shape, and has a proximal part and a distal part having different taper angles,
the distal part is located farther from the valve port than the proximal part so as to seat the valve head part when the valve body is located in the closed position, and
the proximal part has a taper angle that is more obtuse than a taper angle of the distal part.

3. The relief valve for gas according to claim 2, wherein the taper angle of the proximal part continuously changes such that the taper angle increases toward the valve port.

4. The relief valve for gas according to claim 1, wherein the inflow passage is provided with a restrictor.

5. The relief valve for gas according to any one of claims 1 to 4, wherein
the seal member is arranged to fit in the seal groove, and
the seal groove has a curved surface shape in which a section of a lateral face of a secondary side is concave.
